# EUROPEAN PATENT APPLICATION

(11) **EP 4 489 416 A1**
(43) Date of publication of application: **08.01.2025**
(21) Application number: 23183972.1
(22) Date of filing: 06.07.2023
(51) Int. Cl.: H04N 23/51, B60R 11/04, G02B 7/02, H04N 23/54, H04N 23/55

(54) **SENSOR UNIT WITH ROLL ADJUSTABLE HOUSING AND METHOD FOR ASSEMBLING SAME**

(71) Applicant: Aptiv Technologies AG, 8200 Schaffhausen (CH)
(72) Inventor: RAFALOWSKI, Arkadiusz, Dublin, 2 (IE); HEBDA, Pawel, Dublin, 2 (IE)
(74) Representative: Lewis Silkin LLP

(57) **Abstract**

A sensor, e.g. automotive camera, unit and method of assembling same, with relative roll adjustment between the parts. A sensor part (10) and mounting part, (18) having reference features (19), are engaged at respective mating annular surfaces while a connector device (24) is aligned with and extends through an opening (26) in the mounting part (18). A position of the mounting part (18) relative to the sensor part (10) can be chosen by rotating one or the other part about a longitudinal axis (X-X) and then fixing same in place. Angular displacement may be limited by the size of the opening/slot (26). A connector cover (27) may be arranged coaxially with the connector (24), which also covers any gap in the slot (26).

## Description

### Field of disclosure

The present disclosure relates to a sensor unit, particularly a camera housing for use in the automotive field, and method of implementing same.

### Background

Sensors such as cameras are now common in automotive environments. Requirements for angular accuracy during assembly of an automotive camera are very high, i.e. aligning a lens, an imager on a PCB and surface features of the housing along with connector positions. Angular errors can result from the surface mount technology (SMT) process, component tolerances (e.g. imager chip, lens holder) and PCB placement.

### Summary

The present disclosure seeks to address the above issues of conventional solutions and assembly methods or at least provide an alternative to the public and suppliers/manufacturers of sensor devices.

According to a first aspect, a sensor unit is provided according to claim 1. The sensor unit may comprise, for example, a sensor subassembly (or sensor part), a housing (or mount subassembly/mounting part) for attachment to the sensor subassembly (e.g. to enable it to subsequently be mounted to a vehicle), and a connector device/port for connection with an external connector; wherein the housing part is configured to be angularly displaceable relative to the sensor part about a longitudinal axis. In a particular form, the sensor unit is a camera unit and the subassembly comprises a barrel to house a lens, for fixing at a distance from an imager on a PCB. The mounting part is a housing that is angularly adjustable relative to the barrel.

Particularly, the disclosure relates to a sensor unit having: a sensor part; a housing, comprising one or more annular surfaces configured to engage with the sensor part at a mating surface thereof; wherein, during assembly, a rotatable position is selectable to align or coincide the sensor part (e.g. terminal connections) with a reference feature of the housing. The reference feature (as distinct from external reference features used for locating the housing for operational use) may be an opening through the housing to receive a connector or a fixed connector integral with the housing. In this way, the housing/case is fabricated to be rotatable during the assembly process relative to the sensor subassembly and/or the connection port that is to be in electrical communication therewith the sensor/PCB.

The particular problem of roll control is solved by specific design of an imager PCB with a shape that allows it to actively align to the cylindrical lens. After alignment of imager/PCB, the sub assembly is mounted into an annular bearing surface in the housing. The subassembly may be adjusted relative to positioning features of the camera required for assembly into a vehicle and finally fixed by welding or gluing. Angular positioning can be implemented/tested by use of a jig or vision system to ensure correct assembly. Ultimately, accurate angular orientation of the camera results in correct image display for operation in the vehicle.

The design may also allow for installation of a connector in different positions. A few variants are possible, such as: where a connector is mounted in the cover/housing and the PCB is fabricated in a way that allows to compensate the roll movement and allow to change the connector position; or where the connector soldered onto the PCB and the cover has a guide slot for roll and position adjustment.

The assembly process of providing the required roll tolerances can be divided into two phases. In the first phase the lens is actively aligned to the active area of the imager PCB by use of adhesive. In the second phase the subassembly of the combined lens and imager/PCB is mounted into a cylindrical nest, i.e. annular bearing/contact flange, in the housing. An external surface of the housing contains the customer reference features which ultimately guide the sensor unit for installation in a correctly oriented position in the vehicle. The customer reference features may be specific to the end use, i.e. installation is a particular vehicle type or model.

As mentioned, during insertion of the subassembly into the housing, an optical system may relatively position the roll of the subassembly compared to the customer reference feature. The assemblies are connected by welding or gluing once a correct angular/roll placement is determined.

In embodiments, the sensor unit is provided with at least one connector element for assembly through a formed opening in the housing and cooperation with the connector location on the PCB. In this way, an assembled sensor unit comprises an external connector, protruding from the housing side wall, at a position chosen according to customer requirement.

It will be apparent that a housing may be provided with multiple connector locations/connector elements to communicate with the PCB connection features if this is required for operation of the unit.

Advantages of the proposed solution include reduced development time/tooling cost by separating common parts, enabling the requirements of more customers to be met with one design. Notably, a full camera ASM achieves good accuracy of camera roll control during assembly relative to customer reference features.

A second aspect of the invention is embodied by a method for assembling a sensor unit according to claim 11, e.g. for supplying a camera unit adaptable to a range of OEM vehicle requirements.

### Brief Description of Drawings

Illustrative embodiments will now be described with reference to the accompanying drawings in which:
Figure 1 illustrates a camera unit subassembly of a lens and imager PCB;
Figure 2 illustrates an exploded overview of complete camera unit assembly;
Figure 3 illustrates an assembled view of the camera unit from Figure 2, representing a roll adjustment possibility about a lens axis before connection;
Figure 4 illustrates an exploded underneath view of camera assembly with rear connector, allowing to compensate minor tolerances in process of roll alignment, e.g. with soldered connector on PCB;
Figure 5 illustrates an assembled view of the camera unit from Figure 4;
Figure 6 illustrates an exploded underneath view of camera assembly with rear connector, allowing for greater variation in roll adjustment of the required position about a lens axis;
Figure 7 illustrates an assembled view of the camera unit from Figure 6;
Figure 8 illustrates an exploded underneath view of camera assembly with side mounted connector, allowing for roll adjustment of the required position about a lens axis;
Figure 9 illustrates an assembled view of the camera unit from Figure 8;
Figure 10 illustrates an exploded underneath view of camera assembly with fixed side mounted connector, enabling contact pads on PCB to connect with connector while allowing for roll adjustment of the housing about a lens axis;
Figure 11 illustrates an exploded underneath view of camera assembly with fixed side mounted connector, enabling groups of contact pads on PCB to connect with connector while allowing for roll adjustment of the housing about a lens axis; and
Figure 12 illustrates an exploded underneath view of camera assembly with fixed side mounted connector, enabling terminals on PCB to connect with connector while allowing for roll adjustment of the housing about a lens axis.

### Detailed Description

The following description presents exemplary embodiments and, together with the drawings, serves to explain principles of the invention. However, the scope of the invention is not intended to be limited to the precise details of the embodiments or exact adherence with all system features and/or method steps, since variations will be apparent to a skilled person and are deemed also to be covered by the description. Terms for components used herein should be given a broad interpretation that also encompasses equivalent functions and features.

In some cases, several alternative terms (synonyms) for structural, system features have been provided but such terms are not intended to be exhaustive. For the avoidance of doubt, any terms separated by the "/" symbol generally refer to alternative "or" expressions where the terms can be used interchangeably. Descriptive terms should also be given the broadest possible interpretation; e.g. the term "comprising" as used in this specification means "consisting at least in part of" such that interpreting each statement in this specification that includes the term "comprising", features other than that or those prefaced by the term may also be present. Related terms such as "comprise" and "comprises" are to be interpreted in the same manner. Any directional terms such as "vertical", "horizontal", "up", "down", "sideways", "upper" and "lower" are used for convenience of explanation usually with reference to the form shown in illustrations and are not intended to be ultimately limiting if an equivalent function can be achieved with an alternative dimension and/or direction. All directional terms are relative to each other.

The description herein refers to embodiments with particular combinations of steps or features, however, it is envisaged that further combinations and cross-combinations of compatible steps or features between embodiments will be possible. Indeed, isolated features may function independently as an invention from other features and not necessarily require implementation as a complete combination.

It will be understood that the illustrated embodiments show applications only for the purposes of explanation. In practice, the invention may be applied to many different configurations, where the embodiment is straightforward for those skilled in the art to implement.

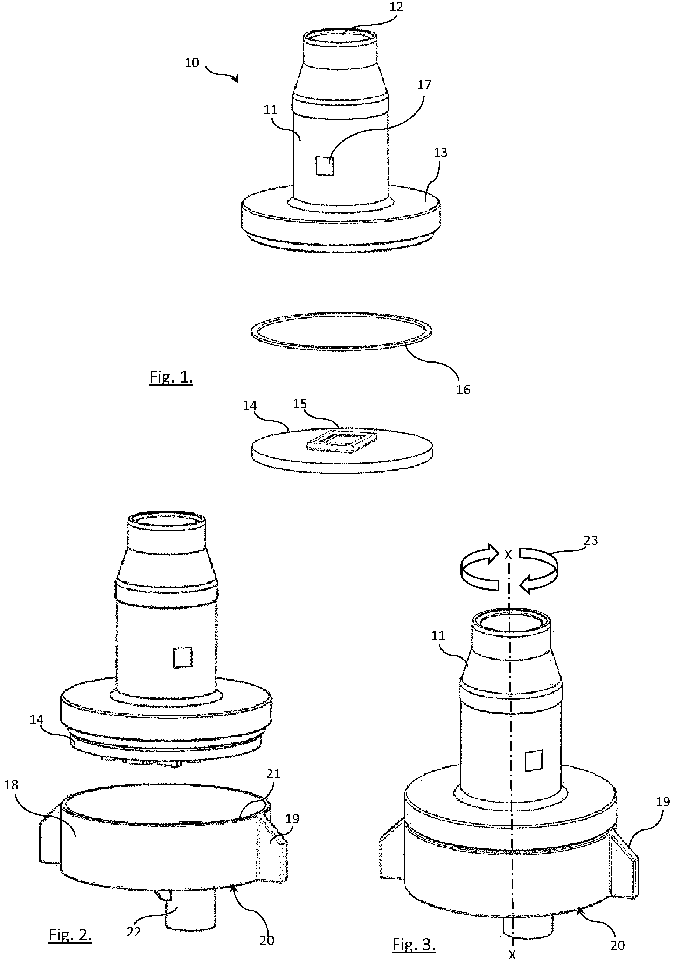

Figure 1 illustrates a sensor part, i.e. a subassembly 10, comprising a barrel 11, a lens 12 and a base 13, concentric with barrel 11, having an interfacing surface to receive a printed circuit board, PCB 14. PCB 14 in turn supports an imager device 15 facing toward lens 12. Therefore, the illustrated embodiment pertains to a camera/image sensor.

In practice, PCB/imager 15 is positioned relative to lens 15 and fixed in place by an adhesive 16 at an optimum focal distance. Part information may be provided as text or a readable code indicated by surface marking 17.

Figure 2 illustrates the introduction of a mounting part 18 to the assembled sensor parts 10 shown in Figure 1.

Mounting part 18 may comprise a walled housing, providing a cavity to accommodate any protruding parts from the subassembly 10 (such as electronic components of the PCB 14, on the opposite side to imager 15). Externally, housing 18 may comprise one or more surface structures 19 that serve as location reference features for use when the assembled sensor unit is installed, such as in a vehicle. There may be one or a plurality of reference features.

Housing 18 is formed as a cup-like or cylindrical enclosure for the PCB and/or other components to be accommodated therein. A closed end 20 has an upstanding peripheral side wall to form the cup-shape and create an internal cavity, further defining an edge/open end 21 adapted for engagement with an annular surface of the sensor base 13. The opening 21 may interface with base 13 of the sensor subassembly by any suitable feature, such as one or more annular surfaces or a flange/bearing surface which enables an interference or looser fit/contact to permit relatively free rotational movement during assembly.

Also shown in Figure 2 is a connector device or cover 22, e.g. a smaller cylindrical wall, upstanding from the closed end 20. Ultimately, an external connector (not shown) may be plugged into or otherwise connected to connector 22 to provide electrical communication (e.g. power and/or data) to a terminal on the surface of PCB 14.

As shown in Figure 3, when initially combined the subassemblies of the sensor 10 and housing 18 are able to move relative to each other about a longitudinal axis X-X passing through barrel 12. Twisting directional arrows 23 represent freedom of movement about the roll axis (i.e. X-X) of the relative parts.

In this way, the reference/registration feature(s) 19 can be rotationally adjusted relative to the lens barrel and associated image forming components. Once in a desired orientation, i.e. determined by a monitoring system or jig, the assembly can be fixed in place by suitable means, i.e. adhesive or welding.

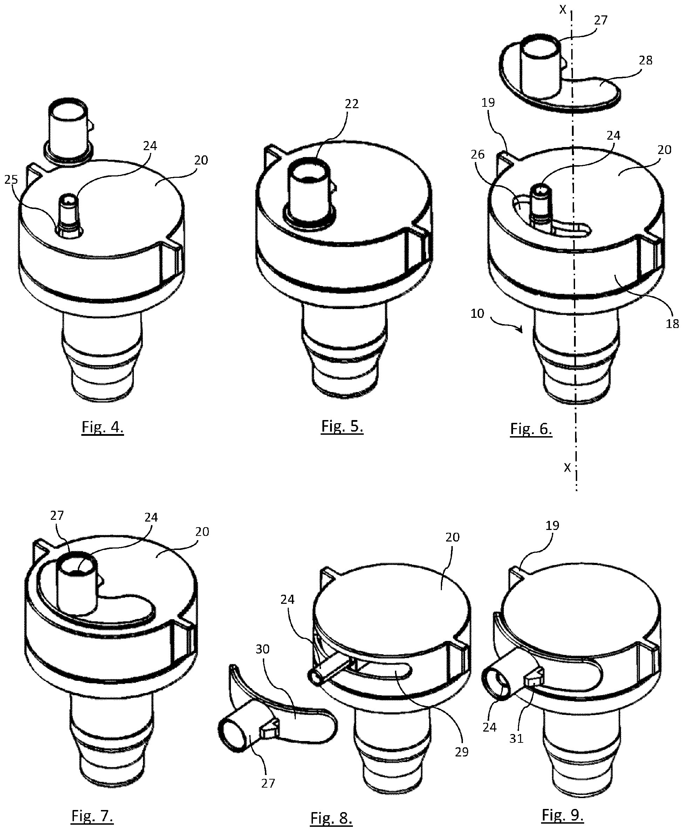

Figures 4 and 5 show an underneath view of the assembled unit from Figure 3, particularly where a sub-connector 24, soldered to PCB 14 (hidden within housing 18), extends through a small opening 25 formed through closed end 20. The opening 25 serves as a reference feature that is to be aligned with the sensor part. Opening 25 may be wide enough to allow some angular adjustment (i.e. rotation in direction 23) in the placement of housing 18 relative to base 12. The connector cover element 22 may then be arranged coaxially with sub-connector 24 and glued/welded into place against surface 20, thereby covering opening 25. If the opening 25 is not perfectly coaxial with connector 24 then any variation will be hidden by cover 22, shown in Figure 5.

To enable a wider variation in allowable angular rotation of relative parts 10 and 18 during assembly, a second embodiment is shown by Figures 6 and 7. Particularly, an elongate opening or arc shaped slot (an arc that is centred on axis X-X) 26 is formed through closed end 20 and serves as a reference feature to align with/accommodate protruding sub-connector 24, being fixedly attached (e.g. by soldering) to internal PCB 14 and hence rotationally fixed with barrel 11 as a whole.

In this way, greater relative rotation of housing 18 is possible than that of Figure 4, delimited by the distal ends of slot 26 when engaged against a side wall of sub-connector 24. Once a desired rotational position is determined, a connector cover element 27 may be placed coaxially over sub-connector 24 and fixed in a similar way to Figure 5, except that a widened base flange 28 provides sufficient surface area to cover and hide slot 26 (see Figure 7). In the illustrated form, flange 28 is a corresponding arc shape to match slot 26, although it should be a greater part of a circular shape so it is able to cover the extreme ends of slot 26. Other configurations are possible so long as, preferably, slot 26 is covered.

Figure 7 shows an assembled view where all parts are glued or welded together, i.e. housing 18 has been rotationally adjusted, fixed and connector cover 27 is in place/adhered to closed end 20. The connection terminals 24 are just visible for an external connector to be plugged therewith, when the unit is installed for its end use.

Figures 8 and 9 illustrate a functionally similar concept to that of Figures 6 and 7, except the orientation of the sub-connector device 24 is offset by ninety degrees, i.e. to extend laterally through a slot 29 formed in the cylindrical side wall of housing 18. Slot 29 is a letter box shape across the cylindrical wall and is, during assembly, able to be covered by a complimentary shaped flange 30 at the base of connector cover element 27.

Also visible is an engagement feature 31 at the side wall of connector cover 27 which, in use, interfaces with a mating part of an external connector (not shown). In the illustrated form it is a hook shape which, in use, may be captured and released by a resilient mating part.

As is the case of Figures 6 and 7, the embodiment of Figures 8 and 9 enables a limited rotational adjustment of mounting part 18 and its reference features 19, determined by the length of slot 29 before it can be angularly fixed in place, completed by the engagement and fixing of cover 27/flange 30 over the exposed slot. The connector terminal 24 is accessible within connector cover 27, available for connection to an external connector (not shown).

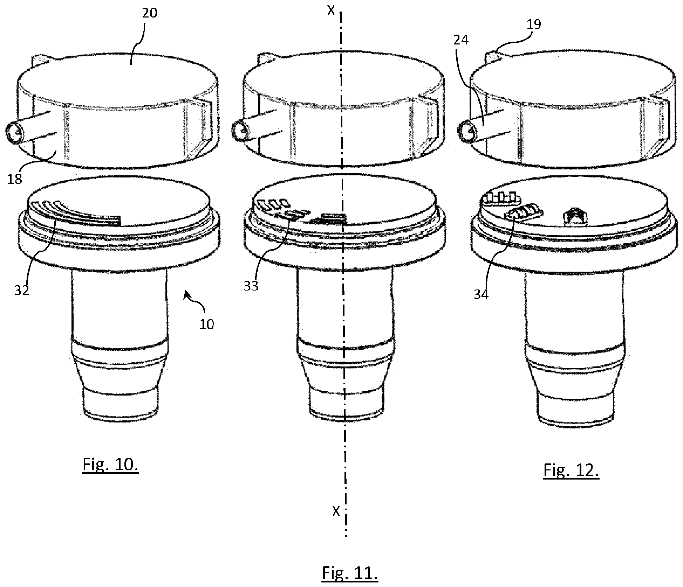

Figures 10, 11 and 12 show variants which may be generally applicable to rear or side (as pictured) extending connectors 24. Namely, where contact with a PCB terminal may be maintained over an arc shaped pad 32, multi-section arc shaped pad 33 or contact points 34 arranged in an arc. All arcs are centred on the rotational axis of the housing 18, i.e. roll axis X-X.

It will be apparent that the configuration of Figures 10 to 12 allows the housing 18 to have a fixed/moulded position for the protruding connector 24, being a reference feature to be aligned with the sensor part, which may or may not have a cover 27 and could extend from a surface of closed end 20 instead of the side wall. As the connector 24 is angularly rotated about axis X-X with housing 18 and its fixed external reference features 19, electrical contact is maintained between the PCB 14 and connector 24, via the contact pads/terminals over a range of movement, as provided by arcs 32, 33 and 34. In this way, relative rotation of housing can be adjusted and then fixed in place.

In the illustrated form of Figure 10, continuous contact is maintained over the angular adjustment movement between two extremes. According to Figures 11 and 12, contact is achieved only at certain positions (e.g. three positions as illustrated) which may correspond to a particular model requirement.

A variation on the foregoing may be to feature an internal flex wire between connector 24 and a terminal of the PCB. That is to say, a wire with sufficient length to accommodate rotatable adjustment of housing 18 relative to fixed sensor part 10 in either direction 23. Such a solution would be functional but requires additional preinstallation (e.g. connector to connector soldering) compared to the illustrated contact solution.

As with all embodiments, angular adjustment can be set and fixed by suitable monitoring and the part labelled according to its end use.

The common concept between all embodiments is enabling the ability to make fine angular adjustments to an imager, relative to reference features, before the relative positions are fixed. As such, while in the prior art an automotive camera model is configured for one angular connector orientation only (and if another connector orientation is required then development of new components is needed), the present camera unit is prepared for many connector (e.g. German standard FAKRA, Fachkreis Automobil) orientation variants and does not require a new housing configuration for each possibility, merely customisation during the assembly process

The exemplary embodiments herein relate to a camera unit, e.g. with a lens and imager, but other sensor types may benefit from an adaptable housing (e.g. sub-assembly) that is configurable according to the entry direction of a connector that it will be required to interface when assembled into a vehicle or like assembly. As such, the present disclosure is directed to a sensor unit/housing of two parts more generally, that is to house associated electronics either with or without the sensor itself.

By way of further summary, a sensor, e.g. automotive camera, unit and method of assembling same is described herein, with relative roll adjustment between the parts. A sensor part and mounting part having reference features is engaged at respective mating annular surfaces while a connector device is aligned with and extends through the mounting part. A position of the mounting part relative to the sensor part can be chosen by rotating one or the other part about a longitudinal axis and then fixing same in place. Angular displacement may be limited by the size of the opening/slot. A connector cover may be arranged coaxially with the connector, which also covers any gap in the slot.

## Claims

1. A sensor unit, comprising:
a sensor part;
a housing, comprising one or more annular surfaces configured to engage with the sensor part at a mating surface thereof;
wherein, during assembly, a rotatable position is selectable to align the sensor part with a reference feature of the housing.

2. The sensor unit of claim 1, further comprising:
a connector device configured to extend through a wall of the housing, for electrical communication with a terminal portion of the sensor part at one end and, at another end, being compatible with an external connector.

3. The sensor unit according to claim 2, wherein the reference feature is an opening formed through a closed end or a side wall of the housing, configured to receive the connector device therethrough.

4. The sensor unit according to claim 3, wherein the opening is an elongate arc and configured for delimiting rotational movement of the connector device extending therethrough.

5. The sensor unit according to claim 3 or 4, comprising a connector cover for enclosing the connector device and covering the opening.

6. The sensor unit according to claim 2, wherein the connector device is formed in a fixed position relative to the housing, and comprises the reference feature alignable with the sensor part.

7. The sensor unit according to claim 6, wherein the terminal portion comprises contacts configured for maintaining electrical connection to the connector device reference feature as the rotatable position of the housing, relative to the sensor unit, is selected.

8. The sensor unit according to claim 7, wherein the contacts are arranged in an arcuate path.

9. The sensor unit according to any preceding claim, wherein the sensor unit comprises a lens and an imager.

10. The sensor unit according to any preceding claim, wherein the sensor part and housing are glued or welded together to fix the selected rotated position.

11. A method of assembling a sensor unit according to any preceding claim, comprising the steps of:
engaging the respective mating surfaces of the sensor part and housing;
selecting a position of the housing relative to the sensor part by rotating one or the other part, thereby aligning the reference feature to the sensor part; and
fixing the selected position by bonding the sensor part to the housing.

12. The method of claim 11, when dependent on claim 5, comprising the step of engaging the connector cover coaxially with the connector device to cover the opening, and bond same to the housing.

13. The method of claim 10, when dependent on claim 7 or 8, wherein, prior to engaging the mating surfaces, the terminal portion of the sensor part is aligned with the connector device such that electrical engagement is achieved when the sensor part and mating part are contacted.

14. The method according to any one of claims 11 to 13, wherein alignment with the reference feature and selection of the rotatable position of the housing is facilitated by a jig or visual inspection system.
